# EUROPEAN PATENT SPECIFICATION

(11) **EP 4 250 950 B1**
(45) Date of publication and mention of the grant of the patent: **28.01.2026**
(21) Application number: 21819446.2
(22) Date of filing: 25.11.2021
(51) Int. Cl.: A23J 3/22, A23J 3/26, A23L 33/185, A23P 30/20

(54) **A PROCESS FOR PREPARING AN EXTRUDED PLANT-BASED FOOD PRODUCT**
VERFAHREN ZUR HERSTELLUNG EINES EXTRUDIERTEN LEBENSMITTELPRODUKTS AUF PFLANZLICHER BASIS
PROCÉDÉ DE PRÉPARATION D'UN PRODUIT ALIMENTAIRE EXTRUDÉ À BASE DE PLANTES

(30) Priority: 27.11.2020 EP 20210205
(43) Date of publication of application: 04.10.2023
(73) Proprietor: Société des Produits Nestlé S.A., 1800 Vevey (CH)
(72) Inventor: BETZ, Reinhold Willy, 78244 GOTTMADINGEN (DE); HUTSCHENREUTER, Simon Alexander, Aurora, OH 44202 (US); KURZ, Kevin, 78467 Konstanz (DE); MICHEL, Martin, 1010 Lausanne (CH); PIBAROT, Patrick, 1820 Territet (CH); WEISS, Jochen, 72664 Kohlberg (DE); HERRMANN, Kurt, 71157 Hildrizhausen (DE); AMBUHL, Mark, 1667 Enney (CH); WENZEL, Hannes, 1095 Lutry (CH)
(74) Representative: Dinger, Hansjörg
(86) International application number: PCT/EP2021/082925
(87) International publication number: WO 2022/112382

(56) References cited:
- WO-A1-2016/150834
- WO-A1-2019/143859
- CN-A- 111 264 682
- US-A1- 2008 102 165
- US-A1- 2016 073 671

## Description

The invention generally relates to a process for preparing an extruded plant-based food product. More specifically the invention relates to a process for preparing an extruded plant-based food product with a fibrous appearance and good juiciness and tenderness properties.

In recent years, it has become common for consumers to choose foods that are convenient and tasty. However, convenient or ready-to-eat foods tend to be nutritionally unbalanced as they are high in fat and short-chain carbohydrates e.g. refined sugars, and low in dietary fiber and protein. In particularly, it is appreciated that the high fat and low dietary fiber level of these convenient foods can contribute to obesity and various chronic diseases, such as coronary heart disease, stroke, diabetes, and certain types of cancer.

It is well known that by supplementing foods with increased levels of dietary fiber and protein, taste can be seriously compromised as off-flavours result in a chalky and bland taste. In addition to the challenges associated with improving taste, it is known that increasing a food's protein level typically results in the loss of the desirable product texture that consumers expect. This is especially critical for extruded plant-based food product products.

Hence, there is an existing need in the art and industry to provide a better solution for extruded plant-based food products for humans or animals such as pets having a fibrous appearance with good juiciness, tenderness and taste properties. WO 2016/150834 A1 discloses a process for preparing a meat analogue food product.

The object of the present invention is to improve the state of the art or at least provide an alternative for an extruded plant-based food product: i) an extruded plant-based food product for humans or animals such as pets; ii) an extruded plant-based food product with a high protein content; iii) an extruded plant-based food product with a protein content above 25wt%, preferably above 30wt%; iv) an extruded plant-based food product having a fibrous appearance with good juiciness and tenderness properties; v) an extruded plant-based food product having a fibrous appearance having starch or starch flour in a low amount; vi) an extruded plant-based food product having good taste properties; vii) an extruded plant-based food product having a fibrous appearance with good juiciness, tenderness and good taste properties; viii) an extruded plant-based food product having a fibrous appearance with good juiciness, tenderness and taste properties with a reduced amount of flavours compared to a standard process.

The object of the present invention is achieved by the subject matter of the independent claims. The dependent claims further develop the idea of the present invention.

A process for preparing an extruded plant-based food comprises the steps of:
a) feeding an extruder barrel with a composition comprising 40-70wt% water and 15-40wt% plant protein;
b) extruding the composition from step a) above the denaturation temperature of the plant protein;
c) cooling the composition from step b) through a cooling die;
d) injecting an aqueous solution into the extruded composition from step c);
wherein the aqueous solution is injected by a needle injector or vacuum-tumbler, preferably by a needle injector.

Another process for preparing an extruded plant-based food product comprises the steps of:
a) feeding an extruder barrel with a composition comprising 40-70wt% water and 15-40wt% plant protein;
b) extruding the composition from step a) above the denaturation temperature of the plant protein;
c) cooling the composition from step b) through a cooling die;
d) cutting the extruded composition from step c)
e) injecting an aqueous solution into the cut extruded composition from step d);
wherein the aqueous solution is injected by a needle injector or vacuum-tumbler, preferably by a needle injector.

It has been surprisingly found by the inventors that by using the above-mentioned process an extruded plant-based food product having a fibrous appearance with good juiciness and tenderness properties can be obtained. The process of the present disclosure allows the continuous production of an extruded plant-based food product that has the fibrous appearance of real meat with good juiciness and tenderness properties using extrusion and injection technology. It has now been found by the inventors that applying an injection of an aqueous solution to an extrudate surprisingly has a beneficial effect regarding the juiciness and tenderness properties of an extruded plant-based food product. In addition, injecting an aqueous solution comprising flavouring has a beneficial effect on the taste profile of the injected extrudate. Heat sensitive flavours, vitamins, minerals, colorant or a combination thereof can be used, which otherwise would not survive the harsh conditions of the extrusion process regarding high temperature and pressure. Injecting an aqueous solution comprising starch increase the water holding capacity of the extrudate. Injecting an aqueous solution comprising hydrocolloid, protein, fiber or a combination thereof increase the amount of injected solution and increase the juiciness and tenderness.

All percentages expressed herein are by weight of the total weight of the extruded plant-based food product unless expressed otherwise.

The terms "food," "food product" and "food composition" mean a product or composition that is intended for ingestion by an animal, including a human, and provides at least one nutrient to the animal or human. The present disclosure is not limited to a specific animal.

A "plant-based food product" is a composition in which meat (i.e. skeletal tissue and non-skeletal muscle from mammals, fish and fowl) and meat by-products (i.e. the non-rendered clean parts, other than meat, derived from slaughtered mammals, fowl or fish) are completely absent.

"Extrusion" is a process used to create objects of a fixed cross-sectional profile. A material is pushed or pulled through a die of the desired cross-section. The two main advantages of this process over other manufacturing processes are its ability to create very complex cross-sections, and to prepare products that are brittle, because the material only encounters compressive and shear stresses. High-moisture extrusion is known as wet extrusion. Extruders typically comprise an extruder barrel within which rotates a close-fitting screw. The screw is made up of screw elements, some of which are helical screw threads to move material through the extruder barrel. Material is introduced into the extruder barrel toward one end, moved along the extruder barrel by the action of the screw and is forced out of the extruder barrel through a nozzle or die at the other end. The rotating screw mixes and works the material in the barrel and compresses it to force it through the die or nozzle. The degree of mixing and work to which the material is subjected, the speed of movement of the material through the extruder barrel and thus the residence time in the extruder barrel and the pressure developed in the extruder barrel can be controlled by the pitch of the screw thread elements, the speed of rotation of the screw and the rate of introduction of material into the extruder barrel. The extruder barrel comprises multiple extruder barrel sections which are joined end to end. Multiple extruder barrel sections are required to carry out different processes involved in extrusion such as conveying, kneading, mixing, devolatilizing, metering and the like. Each extruder barrel section comprises a liner which is press fit into an extruder barrel casing, and heating and cooling elements are provided to regulate temperature of extruder barrel section within permissible range. The total length of an extrusion process can be defined by its modular extrusion barrel length. An extruder barrel is described by its unit of diameter. A "cooling die" is cooling the extruded product to a desired temperature.

The term "plant protein" includes "plant protein isolates" or "plant protein concentrates" or combination thereof. The person skilled in the art knows how to calculate the amount of plant protein within a plant protein concentrate or plant protein isolate. The term "plant protein concentrate" as used herein is a plant material having a protein content between 50-90% (plant protein on a moisture-free basis), preferably between 65-75% (plant protein on a moisture-free basis). Plant protein concentrate also contains plant fiber, typically from about 3.5% up to about 20% by weight on a moisture-free basis. The term plant protein isolate, as used herein is a plant material having a protein content of at least about 90% plant protein on a moisture free basis, preferably between 90-96% (plant protein on a moisture-free basis).

Plant protein include plant protein concentrate or plant protein isolate from pea protein, corn protein (e.g., ground corn or corn gluten), wheat protein (e.g., ground wheat or wheat gluten such as vital wheat gluten), potato protein, legume protein such as soy protein (e.g., soybean meal, soy concentrate, or soy isolate), rice protein (e.g., ground rice or rice gluten), barley protein, algae protein, hemp protein, oat protein, canola protein, fava protein or combinations thereof. Preferably the plant protein is wheat gluten, pea protein, canola protein, hemp protein, fava protein, soy protein or a combination thereof, more preferably pea protein, soy protein, wheat gluten or a combination thereof. In a further embodiment, the extruded plant-based food product of the invention comprises plant protein within step a) in the amount of 15-40wt% (based on the composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the composition). In a further embodiment, the extruded plant-based food product of the invention comprises soy protein, pea protein, wheat gluten or a combination thereof within step a) in the amount of 15-40wt% (based on the composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the composition). In a further embodiment, the extruded plant-based food product of the invention comprises a combination of soy or pea protein with wheat gluten within step a) in the amount of 15-40wt% (based on the composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the composition). In a further embodiment, the extruded plant-based food product of the invention comprises soy protein and wheat gluten within step a) in the amount of 15-40wt% (based on the composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the composition). In a further embodiment the plant protein is selected from a combination of at least two different plant proteins, wherein said plant proteins comprise wheat gluten and at least one other plant protein selected from pea protein, soy protein, faba bean protein, and canola protein and wherein wheat gluten comprises between 20 to 70% of total plant protein in the plant protein mixture, preferably between 40-60%. A combination of wheat gluten and at least one other plant protein has the advantage of a softer texture resulting in an even more tender product.

In a further embodiment, the extruded plant-based food product of the invention comprises water within step a) in an amount of 40-70wt%, preferably 45-70wt%, preferably 45-65wt%, preferably 50-70wt%, preferably 50-65wt%, preferably 55-70wt%, preferably 55-65%.

In a further embodiment, the extruded plant-based food product of the invention comprises lipid in an amount of 1.5-10wt%, preferably 2-10wt%, preferably 2-8wt%, preferably 2-7wt%, preferably 3-8wt%, preferably 3-7wt%. Lipid can be added into the extrusion process and/or into the aqueous solution of the injection. In case of adding oil into the aqueous solution of the injection it is preferably added in form of an emulsion. In an embodiment of the invention the lipid is added into the extruder barrel at a location down-stream of the feeding location of step a). The process of lipid-injection is described in WO2016150834. Lipid can be also added into the aqueous solution of the injection.

The term lipid includes any liquid oil, fat or combination thereof. In an embodiment the term lipid include soybean oil, corn oil, sunflower oil, high oleic sunflower oil, olive oil, canola oil, safflower oil, peanut oil, palm oil, cottonseed oil, coconut oil, almond oil, hazelnut oil, rape seed oil, fractionated palm fat, fully or partially hydrogenated or interesterified palm oil and combinations thereof. Preferably the lipid is sunflower oil.

The term "flavouring" in the context of this invention includes salt, flavouring agents, acids, taste enhancing ingredients, herbs, spices, vegetables or mixtures thereof, which are suitable for being used in a food product. Taste enhancing ingredients may be provided by monosodium glutamate (MSG) and/or yeast extract etc. Salt refers to any suitable alkali metal salt or mixture thereof. The salt used in the composition of this invention is typically, but not limited to, sodium chloride. For example, potassium chloride may be used or any low-sodium product having a taste impression of sodium chloride may be used, as long as the taste in the end formulation is acceptable. Acids may be provided by vinegar, lactic acid, citric acid or combination thereof. Flavourings can be added into the extrusion process and/or into the aqueous solution of the injection. In a further embodiment, the extruded plant-based food product of the invention comprises flavouring in the amount of 0.5-40wt% (based on the total composition), preferably 0.5-35wt%, preferably 0.5-30wt%, preferably 0.5-25wt%, preferably 0.5-20wt%, preferably 0.5-15wt%, preferably 0.5-10wt%, preferably 2-10wt%, preferably 2-8wt%, preferably 3-8wt%.

The term "filler" in the content of this invention includes carbohydrates. Carbohydrates may be provided by starches, flours, sugars, maltodextrins, glucose syrups or combination thereof. The term "starch" includes also flours. Starches and/or flours include those from rice, wheat, corn, barley, and sorghum, potato, cassava, sweet potato, arrowroot, yam, pea, chickpea, mung beans or lentil or any combination thereof. In a further embodiment, the extruded plant-based food product of the invention comprises fillers in the range 0.5-10wt%, preferably 0.5-8wt%, preferably 0.5-7wt%, preferably 1-10wt%, preferably 1-8wt%, preferably 1-7wt%, preferably 1-5wt%, preferably 2-7wt%, preferably 0.5-6wt%, preferably 0.5-5wt%, preferably 0.5-4wt%, preferably 0.5-3wt%.

Starches can be added into the extrusion process and/or into the aqueous solution of the injection. Adding starches into the aqueous solution of the injection has a surprising effect, that the injected extruded food composition has a better water holding capacity once the final product is cooked or fried.

In a further embodiment, the extruded plant-based food product of the invention comprises fibers in the range 0-15wt%, preferably 0-12wt%, preferably 0-10wt%, preferably 0-8wt%, preferably 0.1-15wt%, preferably 0.1-10wt%, preferably 0.1-8wt%, preferably 0.1-5wt%, preferably 1-15wt%, preferably 1-12wt%, preferably 1-10wt%, preferably 1-8wt%, preferably 5-15wt%. "Fibers" according to this invention in the extrusion process are dietary fibers, preferably a water insoluble vegetable dietary fiber. Dietary fiber consists of the remnants of edible plant cells, polysaccharides, lignin and associated substances resistant to (hydrolysis) digestion by the alimentary enzymes of humans. The dietary fibers are from vegetables, fruits, cereal or combinations thereof. Dietary fibers are selected from at least one of carrot, beetroot, pumpkin, citrus, wheat, oat, bamboo, tomato, bell pepper, leek, ginger, onion, kale, parsnip, celery, cucumber, courgette, broccoli, kohlrabi, asparagus, bean, fava bean, lentil, chickpea, peas, lupin, vetches or combinations thereof, preferably carrot, beetroot, pumpkin, citrus, wheat, oat, bamboo, tomato or combinations thereof.

In an embodiment of the invention, the extruded plant-based food product comprises one or more fortification compounds as vitamins, minerals and iron salts. The term vitamins include Vitamins A, B-complex (such as B-1, B-2, B-6 and B-12), C, D, E and K, niacin, and acid vitamins such as pantothenic acid, folic acid and biotin, preferably vitamin B-12. The term minerals include calcium, iron, zinc, magnesium, iodine, copper, phosphorus, manganese, potassium, chromium, molybdenum, selenium, nickel, tin, silicon or vanadium. The term iron salts include ferric sodium EDTA, reduced iron, ferrous lactate, ferric citrate, ferric pyrophosphate, ferrous sulphate monohydrate or ferric ammonium citrate brown, preferably ferric pyrophosphate. Specific amounts of fortification compounds will depend on a variety of factors such as the identity of the ingredient; the species of animal; the animal's age, body weight, general health, sex, and diet; the animal's consumption rate; the purpose for which the food product is administered to the animal; and the like. Therefore, the components and their amounts may vary widely. Fortification compounds can be added into the extrusion process and/or into the aqueous solution of the injection.

In an embodiment the extruded plant-based food product can also comprise one or more colorants. The term colorant include FD&C colors, such as blue no. 1, blue no. 2, green no. 3, red no. 3, red no. 40, yellow no. 5, yellow no. 6, and the like; natural colorants and/or coloring food stuff, such as caramel coloring, annatto, chlorophyllin, cochineal, betanin, turmeric, saffron, paprika, lycopene, elderberry juice, pandan, butterfly pea and the like; titanium dioxide; carbon carbonate; and any suitable food colorant known to the skilled artisan. In one other embodiment of the present invention, the colorant is selected from bell pepper, beetroot, carrot, black current, malted barley powder or combination thereof. In one embodiment of the present invention the meat analogue product comprises between 0.1-10wt% (weight percent of the total composition) of colorants, preferably between 0.1-5wt% (weight percent of the total composition). Colorants can be added into the extrusion process and/or into the aqueous solution of the injection. Due to the heat sensitivity of the many colorants, the colorants are preferably added into the aqueous solution of the injection.

In a further embodiment, the extruded plant-based food product has a protein content of at least 15wt%, preferably at least 20wt%, preferably at least 25wt%. In a further embodiment, the extruded plant-based food product has a protein content between 15-40wt (based on the total composition), preferably 20-40wt%, preferably 25-40wt%, preferably 15-35wt%, preferably 15-30wt%, preferably 15-25wt%, preferably 20-35wt%, preferably 25-35wt%, preferably 20-30wt% (based on the total composition).

In a further embodiment water might be mixed to a dry plant protein before feeding the extruder barrels through a slurry inlet. In case the plant protein is mixed with water before feeding the extruder barrel, the non-meat dough can be transferred, for example by pumping, from the mixing device. In an embodiment, the non-meat dough is transferred directly from the mixing device to the extruder barrel without any other processing or addition or removal of ingredients.

In a further embodiment plant protein in the form of a dry powder is added to the extruder barrel and water is added separately to the extruder barrel. The mixing of the dry plant protein and water is done within the extruder barrel through the mechanical energy forced. Therefore, it is not necessary to form a dough of the plant protein and water before feeding the extruder barrel.

The extruder barrels are heated to a temperature of between 70-300°C, preferably 80-200°C, preferably 90-190°C. The pressure on the front plate (between last extruder barrel and cooling die) is between 10-40 bar, preferably 10-30 bar, preferably 10-20 bar. The screw speed is around 200-600rpm, preferably between 200-500rpm, preferably between 200-400rpm.

During the cooling within the cooling die both the temperature and the pressure are gradually reduced as the heated non-meat dough travels through the cooling device. The dough has moisture and is under elevated temperature, so preferably moisture flashing is controlled to avoid rapid expansion of the food product. Product expansion that is too rapid can disrupt the structure of the texturized food product. However, depending on the desired image of the final food product, some flashing may be required to reduce the temperature of the centre of the food product and/or to expose some of the fibers in the food product. In a preferred embodiment of the invention flashing is avoided. In an embodiment, the extruded mixture undergoes a decrease in pressure at a predetermine rate in the cooling device and/or is subjected to a predetermined final pressure at the end of the cooling device. The extruded mixture has an exit temperature at the end of the cooling die between 40-110°C, preferably between 50-100°C, preferably between 50-98°C, preferably between 60-95°C, preferably between 60-90°C, preferably between 65-98°C, preferably between 65-95°C, preferably between 65-90°C, preferably between 70-90°C. After cooling within the cooling die the extruded mixture is injected with an aqueous solution. A multiple-needle injector is used tc increase the amount of water in the extrudate. In an embodiment of the invention 5-35wt% (based on total composition) of the aqueous solution is injected into the extruded composition, preferably 6-35wt%, preferably 7-35wt%, preferably 8-35wt%, preferably 9-35wt%, preferably 10-35wt%, preferably 12-35wt%, preferably 6-30wt%, preferably 7-30wt%, preferably 8-30wt%, preferably 9-30wt%, preferably 10-30wt%, preferably 12-30wt%, preferably 6-25wt%, preferably 7-25wt%, preferably 8-25wt%, preferably 9-25wt%, preferably 10-25wt%, preferably 12-25wt%, preferably 6-20wt%, preferably 7-20wt%, preferably 8-20wt%, preferably 9-20wt%, preferably 10-20wt%, preferably 12-20wt% (based on total composition).

The aqueous solution comprises a water-based solution.

The water-based solution comprises at least one of the ingredients selected from flavouring, hydrocolloid, starch, protein, dietary fiber, vitamin, mineral, colorant, lipid or a combination thereof, preferably at least one of the ingredients selected from flavouring, hydrocolloid, starch, protein, dietary fiber or a combination thereof. In a preferred embodiment the water-based solution has a viscosity in the range of 1.02 to 10 Pa.s at a shear rate of 1s⁻¹ at 25°C, preferably in the range of 1.02 to 5 Pa.s at a shear rate of 1s⁻¹ at 25°C, preferably in the range of 1.02 to 2 Pa.s at a shear rate of 1s⁻¹ at 25°C, preferably in the range of 1.05 to 2 Pa.s at a shear rate of 1s⁻¹ at 25°C, preferably in the range of 1.1 to 2 Pa.s at a shear rate of 1s⁻¹ at 25°C. The viscosity is measured by using a modular compact Rheometer (Physica MCR 300; measuring system ST24/1D-2V CC27), at a shear rate of 1s-1 at 25°C. In case the viscosity is above the value of water, a higher amount of water-based solution can be injected without leaking out of the injected extruded product. In an embodiment of the invention the water-based solution comprises at least one further ingredient selected 0.1-40wt% of flavouring (based on the aqueous solution), 0.01-10wt% of hydrocolloid (based on the aqueous solution), 0.0001-5wt% of vitamin (based on the aqueous solution), 0.0001-5wt% of mineral (based on the aqueous solution), 0.01-10wt% of colorant (based on the aqueous solution), 0.1-7wt% of starch (based on the aqueous solution), 0.01-5wt% of protein (based on the aqueous solution), 0.01-5wt% of dietary fiber (based on the aqueous solution), 0.01-30wt% of lipid (based on the aqueous solution) or a combination thereof.

In an embodiment of the invention the water-based solution comprises 0.1-40wt% of flavouring (based on the aqueous solution) and 0.1-7wt% of starch (based on the aqueous solution). In an embodiment of the invention the water-based solution comprises 0.1-40wt% of flavouring (based on the aqueous solution), 0.01-10wt% of hydrocolloid (based on the aqueous solution) and 0.1-7wt% of starch (based on the aqueous solution).

In an embodiment of the invention the amount of salt as flavouring in the aqueous solution is between 0.1-15wt% (based on the aqueous solution), preferably between 0.5-12wt%, preferably between 1-10wt%, preferably between 1-8wt%, preferably between 1-5wt% (based on the aqueous solution).

In an embodiment of the invention the amount of flavouring in the aqueous solution is between 0.1-40wt% (based on the aqueous solution), preferably between 0.5-40wt%, preferably between 1-40wt%, preferably between 1-35wt%, preferably between 1-30wt%, preferably between 1-25wt%, preferably between 1-20wt%, preferably between 1-15wt%, preferably between 3-25wt% (based on the aqueous solution).

In an embodiment of the invention the amount of hydrocolloid in the aqueous solution is between 0.01-5wt% (based on the aqueous solution), preferably between 0.1-5wt%, preferably between 0.1-3wt% (based on the aqueous solution). The term "hydrocolloid" in the content of this invention includes xanthan, locust bean gum, guar gum, gellan, konjac gum, agar gum, alginate, pectin, carrageenan or a combination thereof.

In an embodiment of the invention the amount of starch in the aqueous solution is between 0.1-7wt% (based on the aqueous solution), preferably between 0.1-5wt%, preferably between 1-7wt%, preferably between 1-5wt% (based on the aqueous solution). The term "starch" in the content of the aqueous solution of this invention include native or pregelatinized starch or a combination thereof. Starch include those from rice, wheat, corn, barley, and sorghum, potato, cassava, sweet potato, arrowroot, yam, pea, chickpea, mung beans or lentil or any combination thereof.

In an embodiment of the invention the amount of protein in the aqueous solution is between 0.01-5wt% (based on the aqueous solution), preferably between 0.1-5wt%, preferably between 0.1-3wt% (based on the aqueous solution). The term "protein" in the content of the aqueous solution of this invention include plant protein.

In an embodiment of the invention the amount of fiber in the aqueous solution is between 0.01-5wt% (based on the aqueous solution), preferably between 0.1-5wt%, preferably between 0.1-3wt% (based on the aqueous solution). The term "fiber" in the content of the aqueous solution of this invention is preferably a water soluble dietary fiber. This include fibers having a soluble fraction of at least 50%, preferably at least 80%, preferably between 50-99.5%. The fibers are from vegetables, fruits, cereal, pulses or combinations thereof. Fibers are selected from at least one of carrot, beetroot, pumpkin, citrus, wheat, oat, bamboo, tomato, bell pepper, leek, ginger, onion, kale, parsnip, celery, cucumber, courgette, broccoli, kohlrabi, asparagus, bean, fava bean, lentil, chickpea, peas, lupin, vetches, psyllium or combinations thereof, preferably carrot, beetroot, pumpkin, citrus, psyllium, wheat, oat, bamboo, tomato or combinations thereof, preferably psyllium, citrus fiber or a combination thereof.

In an embodiment of the invention the aqueous solution is injected with a pressure between 0.2-5 bar, preferably between 0.5-4 bar, preferably between 0.75-3.5 bar, between 1-3 bar. The temperature of the aqueous solution is between -5 to 38°C; preferably between -5 to 35°C, preferably between -5 to 25°C, preferably between -5 to 20°C, preferably between -5 to 15°C, preferably between -5 to 10°C, preferably between -5 to 5°C; preferably between 0-35°C, preferably between 0-25°C, preferably between 0-20°C, preferably between 0-15°C, preferably between 0-10°C, preferably between 0-5°C; preferably between 1-35°C, preferably between 1-25°C, preferably between 1-15°C, preferably between 1-10°C, preferably between 1-5°C. Surprisingly, it has been found as an advantage to use this temperature range to additionally cool the extruded product by injection, especially as the injected extruded products are often frozen afterwards. Injecting the aqueous solution at this temperature range will shorten the freezing time needed afterwards. The temperature of the aqueous solution can be below 0°C due to ions like NaCl in the aqueous solution. In addition, heat sensitive ingredients like starch and/or colorants can be added to the aqueous solution.

The term "cutting" means that the extruded plant-based food product can be sliced, cut, ground, shredded, grated or a combination thereof, preferably sliced or cut. Cutting can be done with static, rotating or vibrating knives having vertical, horizontal and/or diagonal knives, depending on the shape of the food product to be manufactured. The cutting of the extruded composition can be done after processing step c) or step d), preferably after step c). This means, that the cutting can be done before or after the injection of an aqueous solution, preferable before the injection of the extrudate.

Those skilled in the art will understand that they can freely combine all features of the present invention disclosed herein. In particular, features described for the composition of the present invention may be combined with the process for the preparation of the composition, and vice versa. Further, features described for different embodiments of the present invention may be combined as long as the resulting embodiment falls with the scope of the appended claims.

Further advantages and features of the present invention are apparent from the examples. It will be appreciated that the invention as claimed is not intended to be limited in any way by these examples.

### EXAMPLES

### Example 1-2:

The examples are describing the preparation of an extruded plant-based food product by the process of this invention. A dry mix of the plant protein was added through a hopper into the extruder barrel and water is separately injected into the extruder. The extruder barrels are heated within a curve between 80-180°C. The cooling die is cooling the extruded mixture to an exit temperature of 80°C. The extruded product is cut, and an aqueous solution is injected using a needle injector (Henneken; HPI650Servo). The product was made on a Bühler B93 twin screw extruder from the following materials:

| | | Comp. ex 1 | Example 2 |
|---|---|---|---|
| Extrusion process to obtain extrudate | Water [wt%] | 63 | 63 |
| | Soy Protein concentrate [wt%] | 33 | 33 |
| | Flavouring [wt%] | 4 | 4 |
| Injection into extrudate | Water [wt%] | 0 | 8 |

Comparison example 1 shows no injection of water into the extrudate. In an additional processing step 8wt% of water has been injected into example 2.
8 internal experienced panelists were used to rate the sensory attributes of the examples. Therefore, the examples have been fried in oil before tasting. The fibrous structure of both examples is the same. All panelists appreciated the juicier and more tender mouthfeel of example 2 compared to comparison example 1.

### Example 3:

Following the process of example 1 an extruded product has been obtained from the following materials:

| | | Example 3 |
|---|---|---|
| Extrusion process to obtain extrudate | Water [wt%] | 65 |
| | Soy Protein concentrate [wt%] | 33 |
| | Flavouring [wt%] | 2 |
| Injection into extrudate | Aqueous solution with 2% of flavours (based on aqueous solution) [wt%] | 8 |

8 internal experienced panelists were used to rate the sensory attributes of example 2 compared to example 1. The fibrous and juiciness perception of the products is the same, but example 2 has a better taste compared to example 1. To be not bound by theory it is expected, that the flavour (NaCl and meat flavor) is not entrapped in the protein matrix as it would be by the extrusion process. Therefore, the flavour is perceived more intense in the mouth and the amount of flavour can be lowered in case the flavour is injected within the aqueous solution.

### Example 4-6:

Following the process of example 1 an extruded product has been obtained from the following materials:

| | | Example 4 | Example 5 | Example 6 |
|---|---|---|---|---|
| Extrusion process to obtain extrudate | Water [wt%] | 59 | 59 | 59 |
| | Soy Protein concentrate [wt%] | 18 | 18 | 18 |
| | Wheat Gluten [wt%] | 18 | 18 | 18 |
| | Flavouring [wt%] | 5 | 5 | 5 |
| Injection into extrudate | Aqueous solution with 2wt% of flavours (based on aqueous solution) [wt%] | 10 | - | - |
| Injection into extrudate | Aqueous solution with 2wt% of flavours and 2wt% of starch (based on aqueous solution) [wt%] | - | 10 | - |
| Injection into extrudate | Aqueous solution with 2wt% of flavours and 2wt% of starch and 0.6wt% of xanthan (based on aqueous solution) [wt%] | - | - | 14 |

The aqueous solution of example 5 comprises in addition to example 4 also a starch. The aqueous solution of example 6 comprises in addition a hydrocolloid, which increase the viscosity of the aqueous solution and the amount of the injected aqueous solution.

8 internal experienced panelists were used to rate the sensory attributes of examples 4 to 6. The fibrous perception has been rated equal. Example 5 has been perceived juicier and more tender compared to example 4. The starch in example 5 and 6 increases the water holding capacity of the final product after cooking or frying. After frying in oil example 4 lost 19%wt of water, wherein example 5 only lost 9wt% of water after frying. The best perceived example regarding juiciness and tenderness was example 6.

### Comparison example 7: Boiling of extrudate in water compared to injection

Comparison example 1 has been used to boil the extrudate for 15min in 90°C hot water and compare it against example 2. The extrudate has been weighted before and after the cooking to measure the water up-take. The boiled extrudate only had a water up-take of 4wt% (based on total composition). This shows, that by injecting an aqueous solution into the extrudate according to the invention a higher amount of water into the product can be achieved, which gives a juicier and tender sensorial attribute. In addition, a further advantage is, that the injection of the extrudate with a multiple-needle injector is much faster and only takes a few seconds, whereas the boiling process takes at least several minutes. After boiling the boiled extrudate needs to be cooled, wherein the injection can be done with a cold aqueous solution. This increase again the processing time. In addition, no heat sensitive ingredients (for example starch and/or colorants) can be used during a boiling step compared to the process of injection.

## Claims

1. A process for preparing an extruded plant-based food product, the process comprising the steps of:
a) feeding an extruder barrel with a composition comprising 40-70wt% water and 15-35wt% plant protein;
b) extruding the composition from step a) above the denaturation temperature of the plant protein;
c) cooling the composition from step b) through a cooling die; **characterized in that** the process further comprises the step of:
d) injecting an aqueous solution into the extruded composition from step c);
wherein the aqueous solution is injected by a needle injector, wherein the needle injector is a multiple-needle injector and wherein the aqueous solution comprises a water-based solution and wherein the water-based solution comprises at least one of the ingredients selected from flavouring, hydrocolloid, starch, fiber, protein, vitamin, mineral, colorant, lipid or a combination thereof.

2. The process for preparing an extruded plant-based food product according to claim 1, wherein the extruded plant-based food product does not comprise protein from an animal source.

3. The process for preparing an extruded plant-based food product according to any one of the claims 1 to 2, wherein the plant protein is mixed with the water before feeding the extruder barrels.

4. The process for preparing an extruded plant-based food product according to any one of the claims 1 to 3, wherein the plant protein is added to the extruder barrel in the form of a dry powder and water is added separately into the extruder barrel.

5. The process for preparing an extruded plant-based food product according to any one of the claims 1 to 4, wherein the plant-based protein is selected from soy protein, pea protein, canola protein, hemp protein, oat protein, fava protein or wheat gluten, or a combination thereof.

6. The process for preparing an extruded plant-based food product according to any one of the claims 1 to 5, wherein the plant protein is selected from a combination of at least two different plant proteins, wherein said plant proteins comprise wheat gluten and at least one other plant protein selected from pea protein, soy protein, faba bean protein, and canola protein and wherein wheat gluten comprises between 20 to 70% of total plant protein in the plant protein mixture.

7. The process for preparing an extruded plant-based food product according to one of the claims 1 to 6, wherein the extruder barrels are heated to a temperature between 80-300°C, preferably between 80-150°C.

8. The process for preparing an extruded plant-based food product according to any one of the claims 1 to 7, wherein the extruded mixture has an exit temperature at the end of the cooling die between 50-110°C.

9. The process for preparing an extruded plant-based food product according to any one of the claims 1 to 8 further comprises a cutting of the extruded composition after step c) or step d).

10. The process for preparing an extruded plant-based food product according to any one of the claims 1 to 9, wherein 5-35wt% (based on total composition) of the aqueous solution is injected into the extruded composition.

11. The process for preparing an extruded plant-based food product according to any one of the claims 1 to 10, wherein the aqueous solution has a temperature between -5 to 38°C.

12. The process for preparing an extruded plant-based food product according to claim 1, wherein the aqueous solution comprises at least one further ingredient selected from 0.1-40wt% of flavouring (based on the aqueous solution), 0.01-5wt% of hydrocolloid (based on the aqueous solution), 0.1-7wt% of starch (based on the aqueous solution), 0.01-5wt% of protein (based on the aqueous solution), 0.01-5wt% of fiber (based on the aqueous solution), 0.01-30wt% of lipid (based on the aqueous solution), 0.0001-5wt% of vitamin (based on the aqueous solution), 0.0001-5wt% of mineral (based on the aqueous solution), 0.01-10wt% of colorant (based on the aqueous solution) or a combination thereof.

## Patentansprüche

1. Verfahren zum Herstellen eines extrudierten Nahrungsmittelprodukts auf Pflanzenbasis, das Verfahren umfassend die Schritte:
a) Beschicken eines Extruderzylinders mit einer Zusammensetzung, umfassend zu 40-70 Gew.-% Wasser und zu 15-35 Gew.-% Pflanzenprotein;
b) Extrudieren der Zusammensetzung aus Schritt a) oberhalb der Denaturierungstemperatur des Pflanzenproteins;
c) Abkühlen der Zusammensetzung aus Schritt b) durch eine Kühldüse; **dadurch gekennzeichnet, dass** das Verfahren ferner den Schritt umfasst:
d) Injizieren einer wässrigen Lösung in die extrudierte Zusammensetzung aus Schritt c);
wobei die wässrige Lösung durch einen Nadelinjektor injiziert wird, wobei der Nadelinjektor ein Mehrnadelinjektor ist und wobei die wässrige Lösung eine wasserbasierte Lösung umfasst und wobei die wasserbasierte Lösung mindestens einen der Inhaltsstoffe umfasst, die aus Aroma, Hydrokolloid, Stärke, Ballaststoffen, Proteinen, Vitaminen, Mineralien, Farbstoffen, Lipiden oder einer Kombination davon ausgewählt sind.

2. Verfahren zum Herstellen eines extrudierten Nahrungsmittelprodukts auf Pflanzenbasis nach Anspruch 1, wobei das extrudierte Nahrungsmittelprodukt auf Pflanzenbasis kein Protein eines tierischen Ursprungs umfasst.

3. Verfahren zum Herstellen eines extrudierten Nahrungsmittelprodukts auf Pflanzenbasis nach einem der Ansprüche 1 bis 2, wobei das Pflanzenprotein vor dem Beschicken der Extruderzylinder mit dem Wasser gemischt wird.

4. Verfahren zum Herstellen eines extrudierten Nahrungsmittelprodukts auf Pflanzenbasis nach einem der Ansprüche 1 bis 3, wobei das Pflanzenprotein dem Extruderzylinder in der Form eines trockenen Pulvers zugesetzt wird und Wasser in den Extruderzylinder separat zugesetzt wird.

5. Verfahren zum Herstellen eines extrudierten Nahrungsmittelprodukts auf Pflanzenbasis nach einem der Ansprüche 1 bis 4, wobei das Protein auf Pflanzenbasis aus Sojaprotein, Erbsenprotein, Rapsprotein, Hanfprotein, Haferprotein, Favaprotein oder Weizengluten oder einer Kombination davon ausgewählt ist.

6. Verfahren zum Herstellen eines extrudierten Nahrungsmittelprodukts auf Pflanzenbasis nach einem der Ansprüche 1 bis 5, wobei das Pflanzenprotein aus einer Kombination von mindestens zwei unterschiedlichen Pflanzenproteinen ausgewählt ist, wobei die Pflanzenproteine Weizengluten und mindestens ein anderes Pflanzenprotein umfassen, das aus Erbsenprotein, Sojaprotein, Ackerbohnenprotein und Rapsprotein ausgewählt ist, und wobei Weizengluten zu zwischen 20 und 70 % das gesamte Pflanzenprotein in der Pflanzenproteinmischung umfasst.

7. Verfahren zum Herstellen eines extrudierten Nahrungsmittelprodukts auf Pflanzenbasis nach einem der Ansprüche 1 bis 6, wobei die Extruderzylinder auf eine Temperatur zwischen 80-300 °C, vorzugsweise zwischen 80-150 °C erhitzt werden.

8. Verfahren zum Herstellen eines extrudierten Nahrungsmittelprodukts auf Pflanzenbasis nach einem der Ansprüche 1 bis 7, wobei die extrudierte Mischung eine Austrittstemperatur an dem Ende der Kühldüse zwischen 50-110 °C aufweist.

9. Verfahren zum Herstellen eines extrudierten Nahrungsmittelprodukts auf Pflanzenbasis nach einem der Ansprüche 1 bis 8, das ferner ein Schneiden der extrudierten Zusammensetzung nach Schritt c) oder Schritt d) umfasst.

10. Verfahren zum Herstellen eines extrudierten Nahrungsmittelprodukts auf Pflanzenbasis nach einem der Ansprüche 1 bis 9, wobei zu 5-35 Gew.-% (bezogen auf die gesamte Zusammensetzung) der wässrigen Lösung in die extrudierte Zusammensetzung injiziert wird.

11. Verfahren zum Herstellen eines extrudierten Nahrungsmittelprodukts auf Pflanzenbasis nach einem der Ansprüche 1 bis 10, wobei die wässrige Lösung eine Temperatur zwischen -5 und 38 °C aufweist.

12. Verfahren zum Herstellen eines extrudierten Nahrungsmittelprodukts auf Pflanzenbasis nach Anspruch 1, wobei die wässrige
Lösung mindestens einen weiteren Inhaltsstoff umfasst, der
ausgewählt ist aus 0,1-40 Gew.-% Aroma (bezogen auf die
wässrige Lösung), 0,01-5 Gew.-% Hydrokolloid (basierend auf
der wässrigen Lösung), 0,1-7 Gew.-% Stärke (bezogen auf die
wässrige Lösung), 0,01-5 Gew.-% Protein (bezogen auf die
wässrige Lösung), 0,01-5 Gew.-% Ballaststoffe (bezogen auf die
wässrige Lösung), 0,01-30 Gew.-% Lipid (bezogen auf die
wässrige Lösung), 0,0001-5 Gew.-% Vitamin (bezogen auf die
wässrige Lösung), 0,0001-5 Gew.-% Mineral (bezogen auf die
wässrige Lösung), 0,01-10 Gew.-% Farbstoff (bezogen auf die
wässrige Lösung) oder einer Kombination davon.

## Revendications

1. Procédé permettant de préparer un produit alimentaire extrudé d'origine végétale, le procédé comprenant les étapes consistant à :
a) alimenter un cylindre d'extrusion d'une composition comprenant 40 à 70 % en poids d'eau et 15 à 35 % en poids de protéine végétale ;
b) extruder la composition de l'étape a) au-dessus de la température de dénaturation de la protéine végétale ;
c) refroidir la composition provenant de l'étape b) à travers une matrice de refroidissement ; **caractérisé en ce que** le procédé comprend en outre l'étape consistant à :
d) injecter une solution aqueuse dans la composition extrudée à l'étape c) ;
dans lequel la solution aqueuse est injectée par un injecteur à aiguille, dans lequel l'injecteur à aiguille est un injecteur à aiguilles multiples et dans lequel la solution aqueuse comprend une solution à base d'eau et dans lequel la solution à base d'eau comprend au moins un des ingrédients choisis parmi l'arôme, l'hydrocolloïde, l'amidon, les fibres, les protéines, les vitamines, les minéraux, le colorant, les lipides ou une combinaison de ceux-ci.

2. Procédé permettant de préparer un produit alimentaire extrudé d'origine végétale selon la revendication 1, dans lequel le produit alimentaire extrudé d'origine végétale ne comprend pas de protéines provenant d'une source animale.

3. Procédé permettant de préparer un produit alimentaire extrudé d'origine végétale selon l'une quelconque des revendications 1 à 2, dans lequel la protéine végétale est mélangée à l'eau avant l'alimentation des cylindres d'extrusion.

4. Procédé permettant de préparer un produit alimentaire extrudé d'origine végétale selon l'une quelconque des revendications 1 à 3, dans lequel la protéine végétale est ajoutée au cylindre d'extrusion sous la forme d'une poudre sèche et de l'eau est ajoutée séparément dans le cylindre d'extrusion.

5. Procédé permettant de préparer un produit alimentaire extrudé d'origine végétale selon l'une quelconque des revendications 1 à 4, dans lequel la protéine d'origine végétale est choisie parmi protéine de soja, protéine de pois, protéine de canola, protéine de chanvre, protéine d'avoine, protéine de fève ou gluten de blé, ou une combinaison de ceux-ci.

6. Procédé permettant de préparer un produit alimentaire extrudé d'origine végétale selon l'une quelconque des revendications 1 à 5, dans lequel la protéine végétale est choisie parmi une combinaison d'au moins deux protéines végétales différentes, dans lequel lesdites protéines végétales comprennent du gluten de blé et au moins une autre protéine végétale choisie parmi protéine de pois, protéine de soja, protéine de féverole et protéine de canola et dans lequel le gluten de blé comprend entre 20 et 70 % de la protéine végétale totale dans le mélange de protéines végétales.

7. Procédé permettant de préparer un produit alimentaire extrudé d'origine végétale selon l'une des revendications 1 à 6, dans lequel les cylindres d'extrusion sont chauffés à une température entre 80 et 300 °C, de préférence entre 80 et 150 °C.

8. Procédé permettant de préparer un produit alimentaire extrudé d'origine végétale selon l'une quelconque des revendications 1 à 7, dans lequel le mélange extrudé a une température de sortie au niveau de l'extrémité de la matrice de refroidissement entre 50 et 110 °C.

9. Procédé permettant de préparer un produit alimentaire extrudé d'origine végétale selon l'une quelconque des revendications 1 à 8, comprenant en outre une découpe de la composition extrudée après l'étape c) ou l'étape d).

10. Procédé permettant de préparer un produit alimentaire extrudé d'origine végétale selon l'une quelconque des revendications 1 à 9, dans lequel 5 à 35 % en poids (sur la base de la composition totale) de la solution aqueuse sont injectés dans la composition extrudée.

11. Procédé permettant de préparer un produit alimentaire extrudé d'origine végétale selon l'une quelconque des revendications 1 à 10, dans lequel la solution aqueuse a une température entre -5 et 38 °C.

12. Procédé permettant de préparer un produit alimentaire extrudé d'origine végétale selon la revendication 1, dans lequel la solution aqueuse comprend au moins un autre ingrédient choisi à partir de 0,1 à 40 % en poids d'arômes (sur la base de la solution aqueuse), 0,01 à 5 % en poids d'hydrocolloïde (sur la base de la solution aqueuse), 0,1 à 7 % en poids d'amidon (sur la base de la solution aqueuse), 0,01 à 5 % en poids de protéines (sur la base de la solution aqueuse), 0,01 à 5 % en poids de fibres (sur la base de la solution aqueuse), 0,01 à 30 % en poids de lipides (sur la base de la solution aqueuse), 0,0001 à 5 % en poids de vitamines (sur la base de la solution aqueuse), 0,0001 à 5 % en poids de minéraux (sur la base de la solution aqueuse), 0,01 à 10 % en poids de colorant (sur la base de la solution aqueuse). ou une combinaison de ceux-ci.
